# EUROPEAN PATENT SPECIFICATION

(11) **EP 1 519 523 B1**
(45) Date of publication and mention of the grant of the patent: **28.03.2007**
(21) Application number: 04104061.9
(22) Date of filing: 24.08.2004
(51) Int. Cl.: H04L 12/56

(54) **Routing method based on the spatial coordinates of the network users**
Routingverfahren basierend auf den räumlichen Koordinaten der Netzwerkteilnehmer
Procédé d'acheminement basé sur les coordonnées spatiales des utilisateurs du réseau

(30) Priority: 29.09.2003 EP 03103603
(43) Date of publication of application: 30.03.2005
(73) Proprietor: International Business Machines Corporation, Armonk, N.Y. 10504 (US)
(72) Inventor: STAIGER, Dieter, 71093, Weil im Schönbuch (DE)
(74) Representative: Klein, Hans-Jörg

(56) References cited:
- US-A- 5 495 356
- US-A1- 2001 036 183
- US-A1- 2002 106 069

## Description

### Field of the invention

The present invention relates to the field of routing methods for network systems, in particular networked embedded systems providing a communication platform for a plurality of processing units.

### Background and prior art

The implementation of electrical control units or processing units is constantly growing within the framework of automobile technology, industrial manufacturing technology as well as home entertainment or home appliances. In such systems a processing unit typically has to fulfil a distinct pre-defined function. An electronic system consisting of a plurality of such processing units is therefore denoted a networked embedded system.

Complex electronic embedded systems consist of a large number of electrical control units that have to communicate with each other. Since in today's high-end automobile there exist about 70 processing units, an effective and reliable communication platform has to be provided. Typically the connection as well as the communication between the processing units is realized by a kind of network.

A simple network connecting a plurality of processing units is given by the so-called single or straight bus network. In this network topology a bus connecting all processing units can be represented as a straight line. The communication between the processing units is governed by a bus controller connected to each processing unit. The communication and the data transfer between the processing units are regulated via the bus controllers requesting for communication grants to the bus.

Another common network topology is given by a ring network. Here the bus connecting several processing units can be represented by a closed ring. Access to the network or to the bus is handled in the same way as for the straight bus network by making use of bus controllers.

A common disadvantage of the straight bus network and the ring network is their single point of failure. If the network or the bus system is discontinued between two arbitrary processing units, the entire network communication breaks down. Furthermore the bandwidth of such straight bus and ring networks is restrained because simultaneous access to the bus is limited to only one processing unit.

In the star network topology a central switch controls the access to the bus. The switch, which is connected to all processing units handles the access to an external bus system as well as the communication among the single processing units. In contrast to the ring network or the straight bus network the central switch can establish several connections between various processing units simultaneously.

When a single processing unit is subject to failure or when a single processing unit is somehow disconnected from the central switch, the general functionality of the star network is maintained. Nevertheless the star network system also comprises a single point of failure in form of a central switch. If for any reason the central switch is out of order the entire network communication breaks down.

Usually each processing unit in an automotive environment is designated to a distinct purpose and has different requirements related to the real-time behaviour, data exchange rate, signal transmission and signal processing. Typically a large number of processing units in a high-end vehicle are arranged in several but different network systems described above.

Since a communication between two processing units belonging to different network systems has to be established, the various network systems are typically connected via gateway controllers. The gateway controllers regulate the communication transfer between different bus systems. The overall architecture of the communication platform between the processing units can be described as heterogeneous.

Such heterogeneous networks result from the continuous adaptive implementation of different communication technologies into existing electronic embedded systems. The gateway controller in such a heterogeneous network system brings along two main disadvantages. First it represents a bottle neck for the data transfer within the network and second it represents a single point of failure. If a gateway controller is subject to failure the entire heterogeneous network may break down.

Furthermore a heterogeneous network only allows a limited message routing. The routing of a message between different bus systems belonging to the heterogeneous network having e.g. different data transfer rates requires significant re-computing efforts. The gateway controllers therefore demand significant performance in order to establish a fast and reliable message routing within the heterogeneous network.

The common disadvantages of the above described star bus and ring bus topology as well as the heterogeneous network topology can in general be eliminated with a neural network. Such neural networks feature an autonomic learning behaviour. For instance when a single processing unit fails, its general functionality can be taken over by the remaining processing units. Neural networks therefore do not have a single point of failure or a bottle neck in the framework of message routing. The drawback of neural networks is their immense performance requirements for the single processing units as well as for the multiplicity of connections between the single processing units thus leading to a very complicated network architecture. Therefore they are unlikely to be applicable to cost constrained embedded processing systems in the foreseeable future.

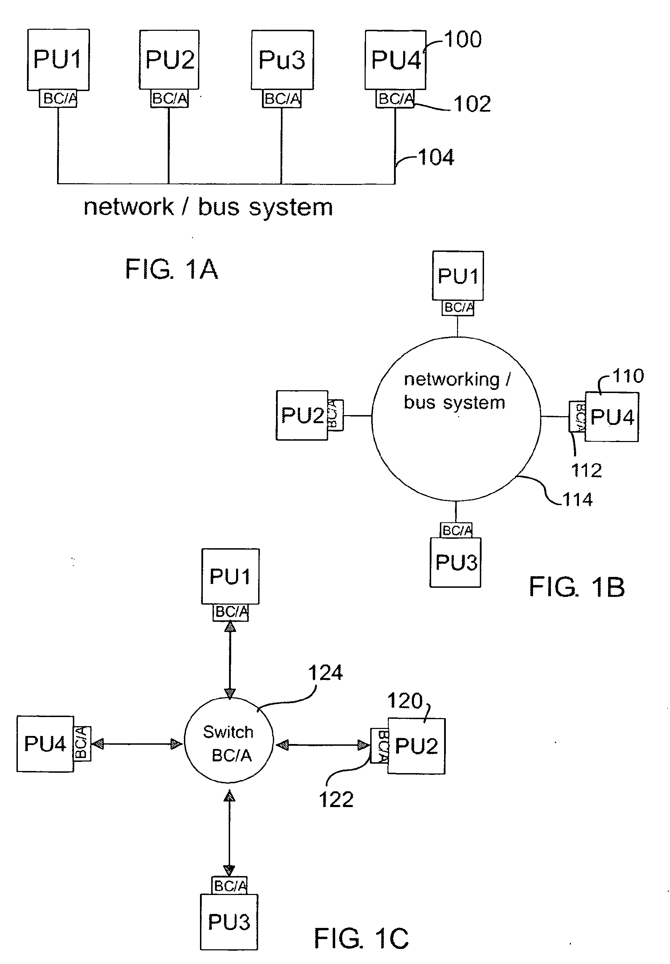

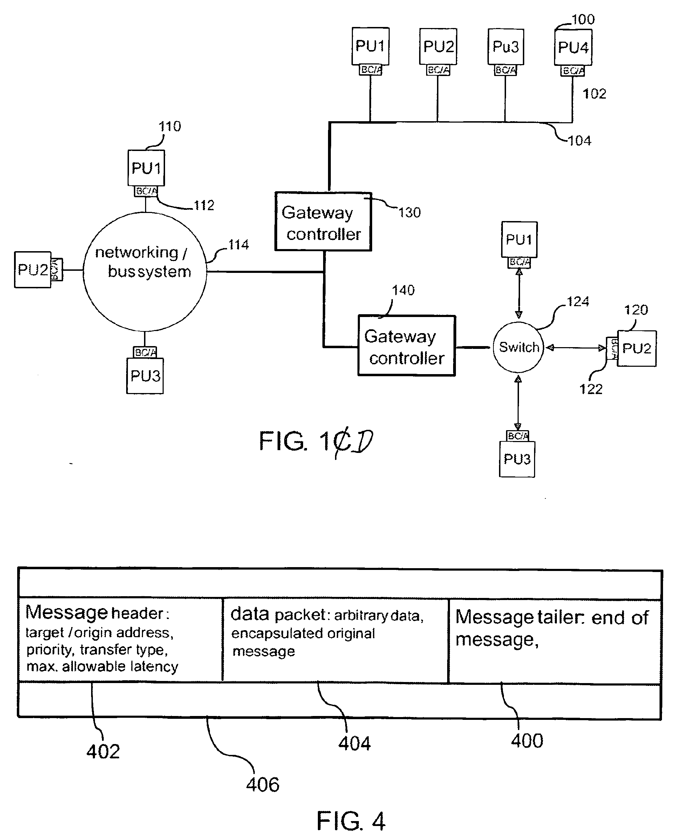

Figure 1 schematically shows a straight bus network system. A processing unit 100 is connected to a bus controller 102 which is connected to the bus 104. Communication between different processing units 100 is controlled via the bus controllers 102 with the straight bus 104 as communication platform. In order to transmit a message via the bus 104 each processing unit 100 has to request a bus grant via the bus controller 102.

Figure 1b shows similar network architecture in form of a ring bus system. The processing units 110 are connected to bus controllers 112 that are connected to the ring bus 114. The communication between the different processing units is provided by the ring bus 114 and controlled by the bus controllers 112.

Figure 1c illustrates a block diagram of a star network topology. Here the single processing units 120 are also connected to bus controllers 122 that are connected to a central switch 124 depending on the requests broadcasted by the bus controller 122 the central switch 124 establishes connections between the single processing units. This topology allows for example a simultaneous communication between several pairs of processing units.

Figure 1d illustrates a block diagram of a heterogeneous network structure. The heterogeneous network consists of several sub-networks featuring different topologies. In this example a straight bus 104, a ring bus 144 and the central switch 124 of the star network are combined with two gateway controllers 130 and 140.

Suppose the processing unit 110 belonging to a ring bus sub-network 114 wants to transmit a message to a processing unit 100 belonging to a straight bus sub-network 104 the gateway controller 130 has to establish the connection between the two sub-networks as well as eventually translate the difference between the different communication protocols between the different sub-networks 104 and 114.

In the same way the gateway controller 140 provides communication between the central switch 124 of the star sub-network and the ring bus network 114. Communication between processing units 120 belonging to the star network and processing units 100 belonging to the straight bus network has to be established by both gateway controllers 130 and 140. A communication between the processing unit 100 and the processing unit 120 has therefore a high demand on computational resources of the gateway controller 130 and 140.

The block diagrams illustrated in figures 1a-d represent ordinary network topologies for communication purpose. A common disadvantage of these networks is given by single points of failure and bottle necks. If the bus system 104 and 114 in figure 1a or figure 1b is discontinued, the entire communication of the whole network breaks down. Similarly when in figure 1c the central switch 124 fails, the entire network is subject to failure.

When in figure 1d the straight bus 104 or the ring bus 114 or the central switch 124 fails, the corresponding sub-network may break down but the remaining part of the heterogeneous network is still working. Nevertheless also here the gateway controllers 130 and 140 limit the bandwidth of the entire communication network and represent bottle necks or single points of failure of the heterogeneous network.

The document US 2001/0036183 describes a method of routing data over a network in which contact is made with a home network to determine the reported geo-position, using this geo-position to transmit data to the device over a path through a node in which the node reads the geo-position, accesses a list of possible recipients and their geo-positions, compares its location to the positions, selects a recipient based at least in part on the proximity of the recipient to the device, and transmits the data over the best path. Eventually, the device becomes the recipient. A geo-position may be transmitted as part of an IP address. The geo-position information can be generated from a GPS receiver. This method and/or IP address may be used in a method of doing business in which the geo-position is used to identify the source and location for delivery. This information may be incorporated into a purchase order or confirmation receipt.

### Summary of the invention

The present invention provides a new network topology and a new method for message routing for a networked embedded computing system. Each processing unit is assigned to a virtual address. The virtual address typically refers to a spatial coordinate system. The coordinate system may be one-, two-, three- or multi-dimensional. According to the choice of the coordinate system each processing unit is connected to several neighbouring processing units.

In an ideal two dimensional coordinate system each processing unit is connected to four neighbouring processing units and in an ideal three dimensional coordinate system each processing unit is connected to six neighbouring processing units. However, the number of neighbouring processing units in a two- or three-dimensional coordinate system may also be less than the above mentioned numbers. In such a case not every, potentially redundant, connection between processing units has to be established. Further a processing unit comprises a computational algorithm for the message routing. A message that has to be transmitted to a distinct target processing unit comprises the virtual address of the corresponding target processing unit.

According to a preferred embodiment of the invention a message is first received by a processing unit. In a next step the processing unit compares the target virtual address of the message with its own virtual address. Depending on its stored algorithm the processing unit determines one of its neighbouring processing units that are directly connected to the processing unit.

The determination of a neighbouring processing unit is based on the spatial coordinate system and the target virtual address of the message, such that the distance between the target virtual address and the virtual address of a neighbouring processing unit minimizes. When a neighbouring processing unit has been determined the message is sent to that neighbouring processing unit. This procedure repeats as long as the target virtual address of the message does not match the virtual address of a processing unit. When finally the target virtual address of the message matches a virtual address of a processing unit the message is processed by this processing unit.

This message routing method based on the described network topology of the invention has several advantages compared to ordinary message routing methods based on straight bus, ring bus or star bus network topologies. The network of the present invention neither features bottle necks nor single points of failure. When in a two or three dimensional network for instance a single processing unit fails, its message routing functionality can be provided by the remaining processing units.

In accordance with a further preferred embodiment of the invention, the sending processing unit checks whether the receiving processing unit is capable to receive a message. The message is then only transferred from the sending processing unit to the receiving processing unit if the receiving processing unit is capable to receive and process the message.

A receiving processing unit may not be capable to receive or to process a message due to several reasons. It may be busy while processing a message or routing another message or it may be simply out of order. In the latter case it does not respond to the request of the sending processing unit. The message is therefore not sent to this receiving processing unit but to another processing unit by the sending processing unit.

Therefore the network topology as well as the routing method of the invention provide an autonomic behaviour. The failure of a distinct system component has only a minor impact on the entire network system. Moreover the failure can automatically be compensated for which no interaction of the user is required. Especially this autonomic behaviour provides a high reliability and a long time stability of the entire network.

The invention provides a method for message routing without a calculation of the complete routing between two arbitrary processing units. The complete message routing is divided into small steps handled by the single processing units. The single processing units do not take care about the overall message routing but only about the routing to a next neighbour.

Another advantage of the present invention is that the single processing units do not require any information about the address of the other processing units of the network embedded system. Instead a single processing unit only requires its own address and the addresses of its next neighbors to which it is directly connected. In particular, the method of space linked communication does not require any kind of look-up table providing a mapping between the physical address space of the single processing units and the address space based on the one-, two-, three- or multi-dimensional coordinate system. The computational resources for the message routing calculation are therefore on a low level.

According to a further preferred embodiment of the invention the combined routing method and the network topology of the present invention can be universally applied to a variety of network systems and communication protocols. The messages being transferred between the different processing units are assigned with a virtual address for the communication network and comprise arbitrary data sequences such as messages corresponding to a different communication protocol.

In particular this universality of the messages is very attractive for replacing gateway controllers in a heterogeneous network with processing units of the invention. In such an implementation each processing unit of the invention represents a sub-network. A message transfer between the different sub-networks is then realized by encapsulating the messages of the sub-networks into the messages of the present invention.

According to a preferred embodiment of the invention the message routing method takes into account different message properties as for example a message priority or a message urgency and various transfer type requirements such as synchronous, asynchronous or isochronous. The method further allows a packet switched as well as circuit switched transfer of messages. In the circuit switch mode a routing path of a message connecting several processing units is established and maintained until a complete message has been transferred between a source processing unit and a target processing unit.

According to a further preferred embodiment of the invention the autonomic behaviour of the network is improved. A potential failure of a distinct processing unit is registered by the surrounding neighbouring processing units. As a consequence the surrounding processing units react on this failure and do no longer send messages to the distinct processing unit which is out of order.

According to a further preferred embodiment of the invention a message may also be directed into a direction which is opposite to the direction of the target processing unit. In the case when a processing unit wishes to send a message to a target processing unit and the processing being surrounded by four neighbouring processing units from which three neighbouring processing units are by any means not capable to process or to receive the message. Furthermore, the shortest message path to reach a target processing unit is via one of the neighbouring processing units that are currently not available. In such a critical situation the method results in the determination of the remaining one of the neighbouring processing units. In this way it is guaranteed that the message is further transmitted through the network in case that the shortest message path is blocked. The present routing method does not necessarily find the shortest message path but depending on the load of the network a message can be routed via a huge variety of alternative message paths. Depending on the given situation the routing method will choose automatically the best path with respect to the momentary general conditions, such as system load, failure of distinct processing units, priority of messages and the given network topology.

### Brief description of the drawings

In the following, preferred embodiments of the invention will be described in greater detail by making reference to the drawings in which:
- Figure 1a: shows a block diagram of straight bus type network,
- Figure 1b: shows a block diagram of a network system with a ring bus topology,
- Figure 1c: shows a block diagram of a star network topology,
- Figure 1d: shows a block diagram of a heterogeneous network system,
- Figure 2a: shows a block diagram of a two dimensional embodiment of the invention,
- Figure 2b: shows a block diagram of a preferred embodiment of the invention in the packet switch mode,
- Figure 2c: shows a block diagram of a preferred embodiment of the invention in a circuit switch mode,
- Figure 3: illustrates a flow chart of the message routing method of the invention,
- Figure 4: shows a block diagram of a message processed by the invention,
- Figure 5: shows a block diagram of a processing unit of the invention,
- Figure 6: shows a block diagram of a central processing unit of a processing unit of the invention.

### Detailed description

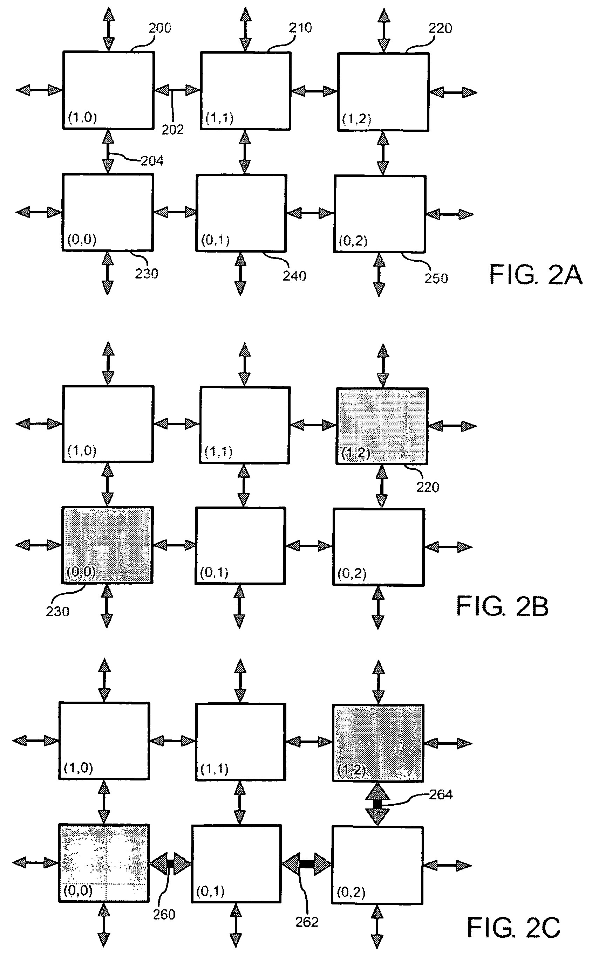

Figure 2a shows a two dimensional embodiment of the invention. The figure illustrates six processing units 200, 210, 220, 230, 240 and 250, that are arranged in an array like way. Each of the processing units is ideally connected to four neighbouring processing units via horizontal connections 202 and vertical connections 204. Furthermore each processing unit is assigned with a virtual address corresponding to the processing units position in the two dimensional array. The messages being processed by these processing units comprise a two dimensional virtual address corresponding to the target processing unit to which the message has to be transferred.

Figure 2b illustrates the same network as figure 2a for the case when the processing unit 230 with the spatial coordinates (0, 0) wants to transmit a message to the processing unit 220 with the spatial coordinates (1,2). Depending on the target virtual address of the message (1,2) and the processing units 230 own address as well as depending on a computation algorithm, the processing unit 230 determines one of its neighbouring processing units 240 or 200 to which the message has to be sent. Before sending the message to one of the neighbouring processing units 200 or 240 the processing unit 230 checks whether the neighbouring processing unit or 240 are capable to receive the message. Suppose that the processing unit 200 is not capable to receive the message from the processing unit 230 and that the processing unit 240 is capable to receive the message from the processing unit 240, the message is transferred via the connection 220 from the processing unit 230 to the processing unit 240.

When the message has arrived at the processing unit 240, the processing unit 240 proceeds in the same way as the processing unit 230 did in the step beforehand. Depending on the computation algorithm and the availability of the neighbouring processing units 210 and 250 the message will be transferred to either the processing unit 250 or to the processing unit 210. The processing unit 250 or 210 will proceed in the same way and transfer the message to the target processing unit 220.

According to the ideal configuration illustrated in figure 2b there exist three different paths in which the message reaches the target processing unit via two intermediate processing units. Already in this simple configuration the network provides a variety of alternative paths for a message in case that a distinct processing unit is busy or out of order or when a connection between two arbitrary processing units is discontinued.

In a preferred embodiment of the invention the determination of a neighbouring processing unit to which a message has to be transferred is such that the distance to the target processing unit is minimized. Suppose that the processing unit 230 wants to transmit the message to the processing unit 240 but the processing unit 240 is not capable to receive the message, then the processing unit 230 selects the processing unit 200 to send the message to.

If now for any of the above mentioned reasons the processing unit 200 is also not capable to receive the message from the processing unit 230, the processing unit 230 will determine another of its four neighbouring processing units to which the message can be transferred. In such a case the message would be transferred in the direction opposite to the direction of that point towards the target processing unit 220. In this way it is guaranteed that the routing of a message does not stop before the message has reached its target processing unit.

According to a further embodiment of the invention the message that has to be transferred between the processing unit 230 and the processing unit 220 may comprise a priority identifier indicating that the message is assigned with a highest, real-time, priority. Suppose that in order to transmit the message to its target virtual address the processing unit 230 wants to transmit the message to the processing unit 240, which is currently receiving another message with a lower priority from the processing unit 210. In such a case the transmission of the message with the lower priority would be interrupted in favour of the message with the higher priority. In this way the network provides a real-time behaviour and minimizes the time needed for a routing procedure.

Figure 2c shows a block diagram of a further embodiment of the invention featuring a circuit switch. According to this ideal embodiment a message path is established connecting a plurality of processing units between the source processing unit and the target processing unit. The routing of the message from the processing unit 230 to the processing unit 220 is realized by a message path connecting the processing unit 230 with the processing unit 240, connecting the processing unit 240 with the processing unit 250 and connecting the processing unit 250 with the processing unit 220.

The so established communication path is indicated by the fat arrows 260, 262 and 264. In this circuit switch mode the connection 260 between the processing units 230 and 240 is established until the processing unit 230 receives a release identifier from the target processing unit 220. The same is valid for the processing units 240 and 250.

The drawings represented by figures (a)-(c) represent ideal implementations of a two-dimensional network according to the present invention. Other implementations in which not every connection between neighboring processing units is established are alternatively possible to reduce costs and to enhance the effectiveness of the manufacturing process.

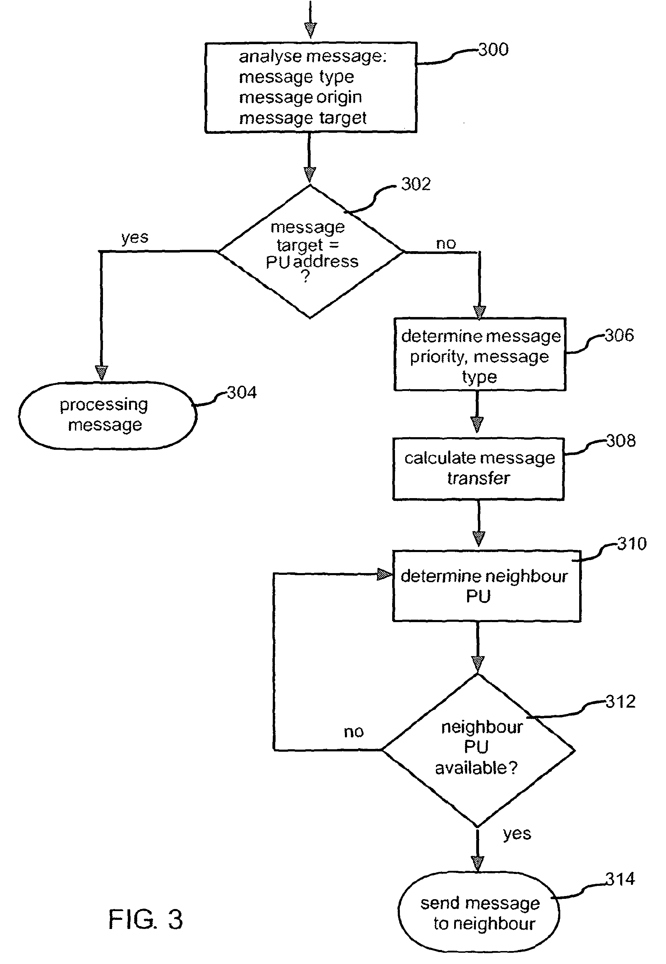

Figure 3 illustrates a flow chart for the routing algorithm performed by a single processing unit. In a first step 300 the message is analysed by the processing unit. In step 300 at least the message origin and the message target and eventually a certain message type is generated from the message header. In step 302 the target virtual address of the message is compared with the virtual address of the processing unit. If in step 302 the virtual address of the message matches the virtual address of the processing unit the message is processed by the processing unit in step 304.

If in step 302 a target virtual address of the message does not match the virtual address of the processing unit the message is further processed in step 306. In step 306 the message priority and the message type is determined. Then the method continues with step 308 in which a message transfer is calculated. According to the calculated message transfer, in the following step 310 a neighbouring processing unit is determined. The method then proceeds with step 312. In step 312 the method checks whether the determined neighbouring processing unit of step 310 is capable to receive the message.

If in step 312 the determined neighbouring processing unit is capable to receive the message, the message is then sent to this determined neighbouring processing unit in step 314. If in step 312 the neighbouring processing unit is not capable to receive a message then the method returns to step 310 and determines another neighbouring processing unit.

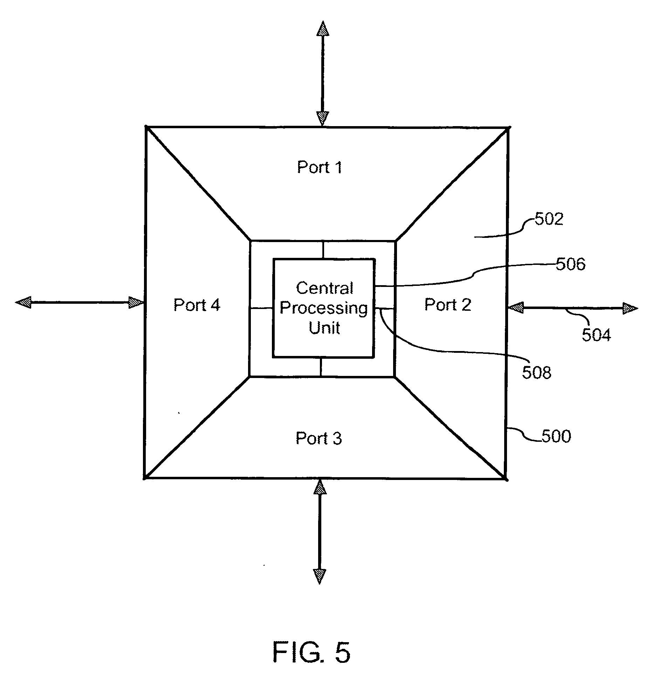

Figure 4 illustrates a block diagram of a message 400 being transferred and processed by the processing unit of the present invention. The message 400 consists of three different parts: a message header 402, a data packet 404 and a message tailer 406. The message header 402 comprises a target virtual address, a source virtual address, a priority identifier, a transfer type identifier indicating whether the message transfer is synchronous, asynchronous or isochronous and whether the message should be transferred in a packet switched or circuit switched mode. Furthermore the message header defines also a maximum allowable latency time defining a time interval in which a neighbouring processing unit has to answer a request of a processing unit in order to be identified as capable to receive a message.

The data packet 404 comprises an arbitrary data sequence. This arbitrary data sequence may correspond to an encapsulated original message that corresponds to a different sub-network with a different communication protocol. Finally the message tailer 406 indicates the end of a message.

Figure 5 illustrates a block diagram of a processing unit in the two-dimensional embodiment illustrated in figure 2a. The processing unit 500 ideally consist of four different ports 502, a central processing unit 506 as well as four connections 508 between the central processing unit 506 and each of the four ports 502. Each port 502 has a connection 504 to a neighbouring processing unit. While such a configuration represents an ideal case, other alternative embodiments in which not every connection to every next neighbour is established are possible. In such a case, the processing unit 500 comprises a number of ports 502 that corresponds to the number of next neighbours to which the processing unit 500 is directly connected to.

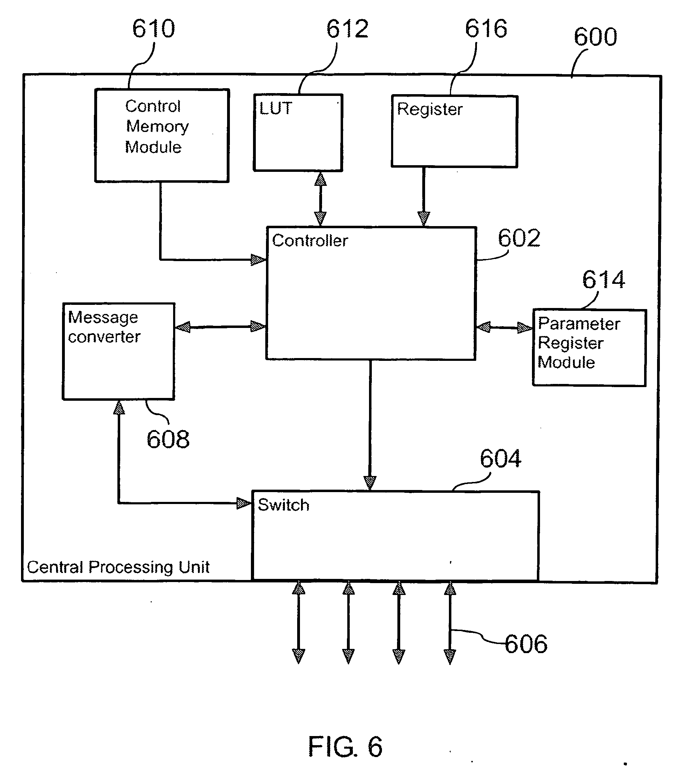

Figure 6 shows a block diagram of a central processing unit. The central processing unit 600 comprises a controller 602, a switch 604, several connections to the ports 606, a message converter 608, a control memory module 610, a look-up table 612 as well as a parameter register module 614 and a register 616. The connections to the ports 606 that connect the central processing unit 600 with the ports of the processing units are connected to the switch 604. The switch 604 is connected to the message converter 608 via a bidirectional connection. The message converter 608 is connected to the controller 602 via a bidirectional connection and the controller 602 is connected to the switch 604 via a uni-directional connection. The controller 602 is further connected via a pre-directional connection to the parameter register module 614. The look-up table 612 is bidirectionally connected to the controller 602 and the control memory module 610 is connected uni-directionally to the controller 602. When a message has been received in the central processing unit 600 by the switch 604, it is directed to the message converter 608. The message converter 608 decodes the virtual address of the message and forwards the decoded information to the controller 602.

The controller 602 performs an arbitration procedure for the routing of the message with the help of a computational algorithm which is stored in the control memory module 610. Depending on the virtual address of the processing unit stored in the register 616 the controller 602 determines a neighbouring processing unit to which the message has to be sent. According to this determination the controller 602 instructs the switch 604 to establish the corresponding connection to the corresponding port. The message is then transferred via the message converter 608 and the switch 604 establishes a connection to the corresponding port and finally to the corresponding neighbouring processing unit.

The look-up table 612 is an optional feature when the processing unit is additionally connected to another non-space linked sub-network, based on e.g. a CAN bus or LIN bus. The look-up table 612 for mapping of legacy addresses connected to the controller 602 stores an address translation table for the conversion of the virtual addresses and the potentially involved non-space linked physical addresses of the single processing units as well as of processing units belonging to a sub-network.

The register 616 in contrast is an essential feature of the central processing unit 600, since it stores the virtual space linked address of the processing unit which is needed for the routing of messages. Preferably the register 616 is designed as a non-volatile memory.

The parameter register module 614 which is connected bidirectionally to the controller 604 stores message state and message type parameters that are necessary for the message routing algorithm performed by the controller 602.

### LIST OF REFERENCE NUMERALS

- 100: processing unit
- 102: bus controller
- 104: network
- 110: processing unit
- 112: bus controller
- 114: ring network
- 120: processing unit
- 122: bus controller
- 124: central switch
- 130: gateway controller
- 140: gateway controller
- 200: processing unit
- 202: connection
- 204: connection
- 210: processing unit
- 220: processing unit
- 230: processing unit
- 240: processing unit
- 250: processing unit
- 260: connection
- 262: connection
- 264: connection
- 400: message
- 402: message header
- 404: data packet
- 406: message tailer
- 500: processing unit
- 502: port
- 504: connection
- 506: central processing unit
- 508: connection
- 600: central processing unit
- 602: controller
- 604: switch
- 606: connection
- 608: message converter
- 610: control memory module
- 612: Look-Up-Table
- 614: parameter register module
- 616: register

## Claims

1. A method of routing a message within a networked embedded system by a first processing unit (200) of the networked embedded system, the processing unit having at least a first and a second port (502) and having assigned a first virtual address, the first virtual address referring to a spatial coordinate system, the method comprising the steps of:
(a) receiving a message (400) with a first priority identifier by the first port (502), the message (400) comprising a second target virtual address referring to the spatial coordinate system,
(b) comparing the first and the second virtual address,
(c) processing the message (400) by the first processing unit (200), if the first address matches the second address,
(d) determining a third virtual address corresponding to a second processing unit (210) of the networked embedded system and being connected to the first processing unit (200) via one of the at least first or second ports (502), whereby the third virtual address differs less from the second virtual address than the first virtual address differs from the second virtual address, if the first virtual address does not match the second virtual address,
(e) sending the message (400) via one of the at least first or second ports (502) to the second processing unit (210), corresponding to the third virtual address, if the first virtual address does not match the second virtual address, and interrupting the transmission or procession of a second message, if said second processing unit (210) is currently transferring or processing said second message with a second priority identifier, and if the priority of said second message is lower than the priority of the first message,
(e') repeating steps (a) to (e) with the second processing unit (210) after the message has been sent to the second processing unit (210) as the first processing unit (200) until the virtual address of the first processing unit matches the target virtual address of the message.

2. The method according to claim 1, the message (400) which is transferred from the first processing unit (200) to the second processing unit (210) comprising:
(f) a header (402) comprising a target virtual address,
(g) a data packet (404) comprising an arbitrary data sequence representing a second message with an arbitrary message type related to an arbitrary network system,
(h) a tailer (406) comprising an identifier determining the end of the message (400).

3. A method according to claim 2, the first processing unit (200) being available to receive the first message via the first port (502) when:
(i) no other message (400) is currently transferred via the first processing unit (200),
(j) the first processing unit (200) is responding to an availability request within a predefined latency time before the message (400) is received by the first processing unit (200),
(k) the priority of the first message (400) is higher than the priority of a second message currently being transferred or processed by the first processing unit (200).

4. The method according to claim 3, sending the message (400) from the first processing unit (200), further comprising the steps of:
(l) determining whether the second neighboring processing unit (210) is available to receive the message (400) from the first processing unit (200) before sending the message (400) from the first processing unit (200) to the second processing unit (210),
(m) sending the message (400) from the first processing unit (200) to the second processing unit (210), if the second processing unit (210) is available to receive the message (400),
(n) determining whether a third neighboring processing unit (230) connected to the first processing unit is available to receive the message (400) from the first processing unit (200), if the second processing unit (210) is not available, such that the virtual address of the third processing unit (230) differs less from the virtual address of the message (400) than the virtual address of the first processing unit (200) differs from the virtual address of the message (400),
(o) sending the message (400) from the first processing unit (200) to the third processing unit (230), if the third processing unit (230) is available to receive the message (400),
(p) return to step (n) with another neighboring processing unit connected to the first processing as the third processing unit, if the third processing unit (230) is not available to receive the message.

5. The method according to claim 3 or 4, further comprising determining a fourth processing unit connected to the first processing unit (200), such that the virtual address of the fourth processing unit differs more from the virtual address of the message (400) than the virtual address of the first processing unit (200) differs from the virtual address of the message, if neither of those second or third neighboring processing units (210, 230) are available with a corresponding virtual address differing less from the virtual address of the message (400) than the virtual address of the first processing unit (200) differs from the virtual address of the message (400).

6. The method according to any one of the preceding claims 1 to 5, further comprising that when the first message (400) with the first priority identifier from the first processing unit (200) has to be transferred to the second processing unit (210) currently transferring or processing the second message with the second priority identifier, the transmission or procession of the second message is interrupted and the transfer of the first message (400) to the second processing unit (210) is initiated, if the priority of the second message is lower than the priority of the first message (400).

7. The method according to any one of the preceding claims 1 to 6, further establishing a message path (260, 262, 264) in the communication network with the source processing unit (230) as a start point and the target processing unit (220) as an end point, the message path (260, 262, 264) connecting a plurality of processing units (230, 240, 250, 220), comprising the steps of:
(q) transmitting the header of the message (402) from the first processing unit (230) to the second processing unit (240) and keeping the connection (260) between the first and second processing unit until the first processing unit (230) receives a release identifier from the second processing unit (240),
(r) repeating step (q) with the second processing unit (240) as the first processing unit until the virtual address of the first processing unit matches the target virtual address of the message (400), thereby establishing the message path (260, 262, 264) consisting of a plurality of processing units (230, 240, 250, 220) connecting the source processing unit (230) and the target processing unit (220),
(s) sending a start identifier from the target processing (220) unit to the source processing unit (230) via the established message path (260, 262, 264) when the message header (402) has reached the target processing unit (220),
(t) transferring the data packet (404) of the message (400) from the source processing unit (230) via the established message path (260, 262, 264) when the start identifier has reached the source processing unit (230),
(u) transmitting a release identifier form the target processing unit (220) to the source processing unit (230) via the message path (260, 262, 264) after the message (400) has been transferred to the target processing unit (220), thereby releasing the single processing units from the plurality of processing units (230, 240, 250, 220) forming the message path (260, 262, 264).

8. The method to any one of the preceding claims 1 to 7, further comprising the steps of:
(v) identifying the second processing unit (210) as limited operable when the second processing unit (210) was not available to receive the message (400) from the first processing unit (200) for several predefined times,
(w) determining a third processing unit (220) instead of the second processing unit (210) for receiving the message (400) from the first processing unit (200) when the second processing unit (210) has been identified as limited operable.

9. A processing unit (200; 500) of a networked embedded system for routing a message (400), comprising:
(a) at least a first and a second port (502) connecting the processing unit (200; 500) at least to a second (210) and a third (220) neighboring processing unit,
(b) means for receiving a first message (400) with a first priority identifier via the first and the second port (502), the first message comprising a second target virtual address referring to a spatial coordinate system,
(b') means for interrupting the transmission or procession of a second message with a second priority identifier if the priority of said second message as indicated by said second priority identifier is lower than the priority of the first message as indicated by said first priority identifier,
(c) a first virtual address referring to the spatial coordinate system,
(c') means for comparing said second target virtual address with said first virtual address,
(d) a central processing unit (506; 600) for processing the first message (400) if said second target virtual address corresponds to the first virtual address,
(e) the central processing unit (506; 600) further comprising a switching module (604) connecting the at least first and second ports (502) with a controller (602), the controller (602) processing the received message (400), negotiating with the at least second and third neighboring processing units (210, 220) and checking for availability, determining a single one of the at least second and third neighboring processing units (210, 220) if said second target virtual address does not correspond to the first virtual address, such that the corresponding virtual address of the determined processing unit differs less from the second virtual address of the message than the first virtual address differs from the second virtual address of the message (400)and sending the message (400) to the determined processing unit via the switching module (604).

10. The processing unit according to claim 10, the central processing unit (506; 600) further comprising:
(g) a message converter (608), connecting the switching module (604) and the controller (602) for decoding and/or encoding the target virtual address of a message (400),
(h) a control memory module (610) connected to the controller (602), storing an algorithm for an arbitration procedure to be executed by the controller (602),
(i) a Look-Up-Table (612) connected to the controller (602), storing an address translation table for the conversion of legacy addresses of sub-networks connected to the processing unit (500) and for the conversion of virtual addresses and physical addresses of at least first, second and third processing units (200, 210, 220),
(j) a register (616) for non-volatile storage of the virtual address of the processing unit (500),
(k) a parameter register module (614) connected to the controller (602), storing message state parameters.

11. A network communication system for transmitting a message (400) from a source processing (200) unit to a target processing unit (210), the message comprising the virtual address of a source processing unit (200) and the virtual address of a target processing unit (210), the network communication system comprising:
(a) a first plurality of processing units setting up the network (200, 210, 220, 230,... ), wherein each processing unit (200) is connected to a second plurality of neighboring processing units (210, 230), such that the second plurality of neighboring processing units is a subset of the first plurality of processing units, each processing unit being assigned to a unique virtual address referring to a spatial coordinate system,
(b) means for comparing the target virtual address of a message (400) comprising a priority identifier determining the message priority with a first virtual address of a first one (200) of the first plurality of processing units (200, 210, 220, 230,... ),
(c) means for determining a second processing unit (210) from the second plurality of processing units (210, 230), such that the corresponding virtual address of the second processing unit (210) differs less from the second virtual address of the message (400) than the first virtual address differs from the second virtual address of the message,
(d) means for checking the availability of the second processing unit (210),
(e) means for transferring the message from the first (200) to the second processing unit (210),
(e') means for interrupting the transmission or procession of a second message processed by the second processing unit if the second message comprises a second priority identifier indicating a priority which is lower than the priority of the first message.

12. The network communication system according to claim 11, the message (400) further comprising:
(f) a header (402) comprising the target virtual address and the source virtual address of the message, an identifier determining the message transfer type and an identifier determining a maximum allowable latency time,
(g) a data packet (404) comprising an arbitrary data sequence representing another message with an arbitrary message type related to an arbitrary network system,
(h) a tailer (406) comprising an identifier determining the end of the message.

13. The network communication system according to claim 11 or 12, further comprising:
(i) means for determining whether the second neighboring processing unit (210) is available to receive the message from the first processing unit (200) before sending the message (400) from the first processing unit (200) to the second processing unit (210),
(j) means for determining whether a third neighboring processing unit (230) connected to the first processing unit is available to receive the message (400) from the first processing unit (200), if the second processing unit (210) is not available, such that the virtual address of the third processing unit (230) differs less from the virtual address of the message than the virtual address of the first processing unit differs from the virtual address of the message.

14. A computer program product for a network communication system comprising computer program means for transmitting messages from a source processing unit (200) to a target processing unit (220) by the steps of:
(a') interrupting the transmission or procession of a second message with a second priority identifier if said second priority identifier indicates a priority which is lower than the priority indicated by a first priority identifier,
(a) comparing a target virtual address of the message (400) with a first priority identifier, said target virtual address representing the virtual address of the target processing unit (220) with the virtual address of a first processing unit (210),
(b) processing the message by the first processing unit (200) if the target virtual address of the message (400) matches the virtual address of the first processing unit (200),
(c) determining a first difference vector comprising the distance between the virtual address of the first processing unit (200) and the target virtual address of the message (400), if the target virtual address of the message does not match the virtual address of the first processing unit (200),
(d) determining a second processing unit (210) of neighboring processing units to the first processing unit (200), to which the message (400) is transferred, such that a second difference vector between the virtual address of the second processing unit (210) and the target virtual address has a smaller norm than the first difference vector,
(e) repeating steps (a) to (d) with the second processing unit (210) as the first processing unit until the virtual address of the first processing unit matches the target virtual address of the message (400) and the message being processed as given by step (b).

15. The computer program product according to claim 14, further comprising computer program means for:
(a) calculating a plurality of difference vectors between the target virtual address of the message (400) and the plurality of virtual addresses of all neighboring processing units (210, 230) connected to the first processing unit (200),
(b) comparing the difference vectors and determining a third difference vector of the plurality of difference vectors with the smallest norm,
(c) determining a third processing unit (230) belonging to the third difference vector,
(d) determining another difference vector with the second smallest norm from the plurality of difference vectors and its appropriate processing unit, if the third processing unit (230) is not available,
(e) repeating step (d) with the next smallest difference vector until the appropriate processing unit is available.

## Patentansprüche

1. Verfahren zum Leiten einer Nachricht innerhalb eines vernetzten eingebetteten Systems durch eine erste Verarbeitungseinheit (200) des vernetzten eingebetteten Systems, wobei die Verarbeitungseinheit wenigstens einen ersten und einen zweiten Anschluss (502) besitzt und ihr eine erste virtuelle Adresse zugeteilt ist, die sich auf ein räumliches Koordinatensystem bezieht, wobei das Verfahren die folgenden Schritte umfasst:
(a) Empfangen einer Nachricht (400) mit einem ersten Prioritätsbezeichner durch den ersten Port (502), wobei die Nachricht (400) eine zweite virtuelle Zieladresse umfasst, die sich auf das räumliche Koordinatensystem bezieht,
(b) Vergleichen der ersten und zweiten virtuellen Adresse,
(c) Verarbeiten der Nachricht (400) durch die erste Verarbeitungseinheit (200), falls die erste Adresse mit der zweiten Adresse übereinstimmt,
(d) Ermitteln einer dritten virtuellen Adresse, die einer zweiten Verarbeitungseinheit (210) des vernetzten eingebetteten Systems entspricht, welche an die erste Verarbeitungseinheit (200) über einen ersten und/oder den zweiten Anschluss (502) angeschlossen ist, wobei sich die dritte virtuelle Adresse von der zweiten virtuellen Adresse um weniger unterscheidet, als sich die erste virtuelle Adresse von der zweiten virtuellen Adresse unterscheidet, falls die erste virtuelle Adresse von der zweiten virtuellen Adresse abweicht,
(e) Senden der Nachricht (400) über einen ersten und/oder zweiten Anschluss (502) an die zweite Verarbeitungseinheit (210) entsprechend der dritten virtuellen Adresse, falls die erste virtuelle Adresse nicht mit der zweiten virtuellen Adresse übereinstimmt, und Unterbrechen der Übermittlung oder der Verarbeitung einer zweiten Nachricht, falls die zweite Verarbeitungseinheit (210) momentan die zweite Nachricht mit einem zweiten Prioritätsbezeichner überträgt oder verarbeitet und falls die Priorität der zweiten Nachricht geringer als die Priorität der ersten Nachricht ist,
(e') Wiederholen der Schritte (a) bis (e) mit der zweiten Verarbeitungseinheit (210) als erste Verarbeitungseinheit (200), nachdem die Nachricht an die zweite verarbeitungseinheit (210) gesendet wurde, bis die virtuelle Adresse der ersten Verarbeitungseinheit mit der virtuellen Zieladresse der Nachricht übereinstimmt.

2. Verfahren nach Anspruch 1, wobei die von der ersten Verarbeitungseinheit (200) an die zweite Verarbeitungseinheit (210) übertragene Nachricht (400) Folgendes umfasst:
(f) einen Vorsatz (402), der die virtuelle Zieladresse umfasst,
(g) ein Datenpaket (404), das eine beliebige Datenfolge enthält, die eine zweite Nachricht von beliebigem Nachrichtentyp bzgl. eines beliebiges Netzwerksystems darstellt,
(h) ein Anhang (406), der einen Bezeichner zur Bestimmung des Endes der Nachricht (400) umfasst.

3. Verfahren nach Anspruch 2, wobei die erste Verarbeitungseinheit (200) zur Verfügung steht, die erste Nachricht über den ersten Anschluss (502) zu empfangen, wenn:
(i) keine andere Nachricht (400) momentan über die erste Verarbeitungseinheit (200) übertragen wird,
(j) die erste verarbeitungseinheit (200) auf eine Verfügbarkeitsanforderung innerhalb einer vorgegebenen Latenzzeit antwortet, bevor die Nachricht (400) von der ersten Verarbeitungseinheit (200) empfangen wird,
(k) die Priorität der ersten Nachricht (400) höher ist, als die Priorität einer zweiten Nachricht, die momentan von der ersten Verarbeitungseinheit (200) übertragen oder verarbeitet wird.

4. Verfahren nach Anspruch 3, wobei das Senden der Nachricht (400) abgehend von der ersten Verarbeitungseinheit (200) ferner die folgenden Schritte umfasst:
(l) Ermitteln, ob die zweite benachbarte Verarbeitungseinheit (210) zum Empfangen der Nachricht (400) von der ersten Verarbeitungseinheit (200) verfügbar ist, bevor die Nachricht (400) von der ersten Verarbeitungseinheit (200) an die zweite Verarbeitungseinheit (210) gesendet wird,
(m) Senden der Nachricht (400) von der ersten Verarbeitungseinheit (200) an die zweite Verarbeitungseinheit (210), falls die zweite Verarbeitungseinheit (210) zum Empfangen der Nachricht (400) verfügbar ist,
(n) Ermitteln, ob eine dritte benachbarte Verarbeitungseinheit (230), die mit der ersten Verarbeitungseinheit verbunden ist, zum Empfangen der Nachricht (400) von der ersten Verarbeitungseinheit (200) verfügbar ist, falls die zweite Verarbeitungseinheit (210) nicht zur Verfügung steht, sodass sich die virtuelle Adresse der dritten Verarbeitungseinheit (230) von der virtuellen Adresse der Nachricht (400) um weniger unterscheidet, als sich die Adresse der ersten Verarbeitungseinheit (200) von der virtuellen Adresse der Nachricht (400) unterscheidet,
(o) Senden der Nachricht (400) von der ersten Verarbeitungseinheit (200) an die dritte Verarbeitungseinheit (230), falls die dritte Verarbeitungseinheit (230) zum Empfangen der Nachricht (400) verfügbar ist,
(p) Zurückkehren zu Schritt (n) mit einer anderen benachbarten Verarbeitungseinheit, die mit der ersten Verarbeitungseinheit verbunden ist, als dritter Verarbeitungseinheit, falls die dritte Verarbeitungseinheit (230) nicht zum Empfangen der Nachricht verfügbar ist.

5. Verfahren nach Anspruch 3 oder 4, das ferner das Ermitteln einer vierten, mit der ersten Verarbeitungseinheit (200) verbundenen Verarbeitungseinheit umfasst, sodass sich die virtuelle Adresse der vierten Verarbeitungseinheit von der virtuellen Adresse der Nachricht (400) um mehr unterscheidet, als sich die virtuelle Adresse der ersten Verarbeitungseinheit (200) von der virtuellen Adresse der Nachricht unterscheidet, falls weder die zweite noch die dritte benachbarte Verarbeitungseinheiten (210, 230) mit einer entsprechenden virtuellen Adresse verfügbar ist, welche sich von der virtuellen Adresse der Nachricht (400) um weniger unterscheidet, als sich die virtuelle Adresse der ersten Verarbeitungseinheit (200) von der virtuellen Adresse der Nachricht (400) unterscheidet.

6. Verfahren nach einem der vorangehenden Ansprüche 1 bis 5, wobei für den Fall, dass die erste Nachricht (400) mit dem ersten Prioritätsbezeichner von der ersten Verarbeitungseinheit (200) an die zweite Verarbeitungseinheit (210) übertragen werden muss, während Letztere momentan die zweite Nachricht mit dem zweiten Prioritätsbezeichner überträgt oder verarbeitet, das Verfahren ferner die Unterbrechung der Übertragung oder Verarbeitung der zweiten Nachricht mit dem zweiten Prioritätsbezeichner umfasst und die Übertragung der ersten Nachricht (400) an die zweite Verarbeitungseinheit (210) einleitet, falls die Priorität der zweiten Nachricht geringer ist als die Priorität der ersten Nachricht (400).

7. Verfahren nach einem der vorangehenden Ansprüche 1 bis 6, das ferner einen Nachrichtenpfad (260, 262, 264) in dem Datenübertragungsnetzwerk mit der Quellverarbeitungseinheit (230) als ein Startpunkt und der Zielverarbeitungseinheit (220) als ein Endpunkt einrichtet, wobei der Nachrichtenpfad (260, 262, 264) eine Vielzahl von Verarbeitungseinheiten (230, 240, 250, 220) verbindet, und das Verfahren folgende Schritte umfasst:
(q) Übertragen des Vorsatzes der Nachricht (402) von der ersten Verarbeitungseinheit (230) an die zweite Verarbeitungseinheit (240) und Aufrechterhalten der Verbindung (260) zwischen der ersten und der zweiten Verarbeitungseinheit, bis die erste Verarbeitungseinheit (230) einen Freigabebezeichner von der zweiten Verarbeitungseinheit (240) empfängt,
(r) Wiederholen des Schrittes (q) mit der zweiten Verarbeitungseinheit (240) als erste Verarbeitungseinheit, bis die virtuelle Adresse der ersten Verarbeitungseinheit mit der virtuellen Zieladresse der Nachricht (400) übereinstimmt, womit ein Nachrichtenpfad (260, 262, 264) einrichtet wird, der aus einer Vielzahl von Verarbeitungseinheiten (230, 240, 250, 220) besteht und die Quellverarbeitungseinheit (230) mit der Zielverarbeitungseinheit (220) verbindet,
(s) Senden eines Startbezeichners abgehend von der Zielverarbeitungseinheit (220) an die Quellverarbeitungseinheit (230) über den eingerichteten Nachrichtenpfad (260, 262, 264), wenn der Nachrichtenvorsatz (402) die Zielverarbeitungseinheit (220) erreicht hat,
(t) Übertragen des Datenpakets (404) der Nachricht (400) von der ersten Verarbeitungseinheit (230) über den eingerichteten Nachrichtenpfad (260, 262, 264), wenn der Startbezeichner die Quellverarbeitungseinheit (230) erreicht hat,
(u) Übermitteln eines Freigabebezeichners von der Zielverarbeitungseinheit (220) an die Quellverarbeitungseinheit (230) über einen Nachrichtenpfad (260, 262, 264), nachdem die Nachricht (400) an die Zielverarbeitungseinheit (220) übertragen wurde, womit die einzelnen Verarbeitungseinheiten aus der Vielzahl der Verarbeitungseinheiten (230, 240, 250, 220), die den Nachrichtenpfad (260, 262, 264) bilden, freigegeben werden.

8. Verfahren nach einem der vorangehenden Ansprüche 1 bis 7, das ferner die folgenden Schritte umfasst:
(v) Identifizieren der zweiten Verarbeitungseinheit (210) als eingeschränkt betreibbar, wenn die zweite Verarbeitungseinheit (210) zum Empfangen der Nachricht (400) von der ersten Verarbeitungseinheit (200) für mehrere vorgegebene Zeiträume nicht verfügbar war,
(w) Ermitteln einer dritten Verarbeitungseinheit (220) anstelle der zweiten Verarbeitungseinheit (210) zum Empfangen der Nachricht (400) von der ersten Verarbeitungseinheit (200), wenn die zweite Verarbeitungseinheit (210) als eingeschränkt betreibbar identifiziert wurde.

9. Verarbeitungseinheit (200; 500) eines vernetzten eingebetteten Systems zum Leiten einer Nachricht (400), wobei die Einheit Folgendes umfasst:
(a) wenigstens einen ersten und einen zweiten Anschluss (502), der die Verarbeitungseinheit (200; 500) mit wenigstens einer zweiten (210) und einer dritten (220) benachbarten Verarbeitungseinheit verbindet,
(b) Mittel zum Empfangen einer ersten Nachricht (400) mit einem ersten Prioritätsbezeichner über den ersten und den zweiten Anschluss (502), wobei die erste Nachricht eine zweite virtuelle Zieladresse enthält, die sich auf ein räumliches Koordinatensystem bezieht,
(b') Mittel zur Unterbrechung der Übermittlung oder der Verarbeitung einer zweiten Nachricht mit einem zweiten Prioritätsbezeichner, falls die Priorität der zweiten Nachricht, die vom zweiten Prioritätsbezeichner angegeben wird, geringer ist als die Priorität der ersten Nachricht, die vom ersten Prioritätsbezeichner angegeben wird,
(c) eine erste virtuelle Adresse, die sich auf ein räumliches Koordinatensystem bezieht,
(c') Mittel zum Vergleich der zweiten virtuellen Zieladresse mit der ersten virtuellen Adresse,
(d) eine Zentraleinheit (506; 600) zum Verarbeiten der ersten Nachricht (400), falls die zweite virtuelle Zieladresse mit der ersten virtuellen Adresse übereinstimmt,
(e) die Zentraleinheit (506; 600), die ferner einen Vermittler (604) umfasst, das den ersten und/oder zweiten Port (502) mit einer Steuereinheit (602) verbindet, welche die empfangene Nachricht (400) verarbeitet, mit der zweiten und/oder dritten benachbarten Verarbeitungseinheit (210, 220) verhandelt und diese auf Verfügbarkeit prüft, eine einzelne der der zweiten und/oder dritten benachbarten Verarbeitungseinheit (210, 220) ermittelt, falls die zweite virtuelle Zieladresse nicht der ersten virtuellen Adresse entspricht, sodass sich die entsprechende virtuelle Adresse der ermittelten Verarbeitungseinheit um weniger von der zweiten virtuellen Adresse der Nachricht unterscheidet, als sich die erste virtuelle Adresse von der zweiten virtuellen Adresse der Nachricht (400) unterscheidet, und die Nachricht (400) an die ermittelte Verarbeitungseinheit über den Vermittler (604) sendet.

10. Verarbeitungseinheit nach Anspruch 9 , wobei die Zentraleinheit (506; 600) ferner Folgendes umfasst:
(g) einen Nachrichtenumformer (608), der den Vermittler (604) und die Steuereinheit (602) zur Decodierung und/oder Codierung der virtuellen Zieladresse einer Nachricht (400) verbindet,
(h) ein Steuerspeicher-Modul (610), das an die Steuereinheit (602) angeschlossen ist, welches einen Algorithmus für eine Entscheidungsprozedur speichert, die von der Steuereinheit ausgeführt wird (602),
(i) eine mit der Steuereinheit verbundene Nachschlagetabelle (612), die eine Tabelle zur Adressübersetzung für die Umsetzung von Stammadressen von Teilnetzwerken, die mit der verarbeitungseinheit (500) verbunden sind, und die Umsetzung von virtuellen Adressen und physischen Adressen von zumindest den ersten, zweiten und dritten Verarbeitungseinheiten (200, 210, 220) speichert,
(j) ein Register (616) zur nichtflüchtigen Speicherung der virtuellen Adresse der Verarbeitungseinheit (500),
(k) ein Parameter-Registermodul (614), das an die Steuereinheit (602) angeschlossen ist und Zustandsparameter der Nachricht speichert.

11. Netzwerk-Datenübertragungssystem zum Übermitteln einer Nachricht (400) von einer Quellverarbeitungseinheit (200) an eine Zielverarbeitungseinheit (210), wobei die Nachricht die virtuelle Adresse einer Quellverarbeitungseinheit (200) und die virtuelle Adresse einer Zielverarbeitungseinheit (210) umfasst, und das Netzwerk Folgendes umfasst:
(a) eine erste Vielzahl von Verarbeitungseinheiten, die das Netzwerk (200, 210, 220, 230, ...) festlegen, worin jede Verarbeitungseinheit (200) mit einer zweiten Vielzahl von benachbarten Verarbeitungseinheiten (210, 230) so verbunden ist, dass die zweite Vielzahl von benachbarten Verarbeitungseinheiten eine Teilmenge der ersten Vielzahl von Verarbeitungseinheiten ist, und jeder Verarbeitungseinheit eine eindeutige virtuelle Adresse bzgl. eines räumlichen Koordinatensystems zugeteilt wird,
(b) ein Mittel zum Vergleichen der virtuellen Zieladresse einer Nachricht (400), welche einen Prioritätsbezeichner zur Bestimmung der Nachrichtenpriorität umfasst, mit einer ersten virtuellen Adresse einer ersten Verarbeitungseinheit (200) unter der ersten Vielzahl von Verarbeitungseinheiten (200, 210, 220, 230, ...),
(c) ein Mittel zur Ermittlung einer zweiten Verarbeitungseinheit (210) unter der zweiten Vielzahl von Verarbeitungseinheiten (210, 230) so, dass sich die entsprechende virtuelle Adresse der zweiten Verarbeitungseinheit (210) um weniger von der zweiten virtuellen Adresse der Nachricht (400) unterscheidet, als sich die erste virtuelle Adresse von der zweiten virtuellen Adresse der Nachricht unterscheidet.
(d) ein Mittel zur Prüfung der Verfügbarkeit der zweiten Verarbeitungseinheit (210),
(e) ein Mittel zur Übertragung der Nachricht von der ersten (200) an die zweite Verarbeitungseinheit (210),
(e') ein Mittel zur Unterbrechung der Übertragung oder Verarbeitung einer zweiten Nachricht, die von der zweiten Verarbeitungseinheit bearbeitet wird, falls die zweite Nachricht einen zweiten Prioritätsbezeichner enthält, der eine geringere Priorität als die Priorität der ersten Nachricht vorgibt.

12. Netzwerk-Datenübertragungssystem nach Anspruch 11, wobei die Nachricht (400) Folgendes beinhaltet:
(f) einen Vorsatz (402), der eine virtuelle Zieladresse und die virtuelle Quelladresse der Nachricht enthält, einen Bezeichner, der die Übertragungsart der Nachricht festlegt, und einen Bezeichner, der die maximal zulässige Latenzzeit festlegt,
(g) ein Datenpaket (404), welches eine beliebige Datenfolge enthält und eine andere Nachricht von beliebigem Nachrichtentyp bzgl. eines beliebigen Netzwerksystems darstellt,
(h) ein Anhang (406), der einen Bezeichner zur Festlegung des Endes des Nachricht enthält.

13. Netzwerk-Datenübertragungssystem nach Anspruch 11 oder 12, das ferner Folgendes umfasst:
(i) ein Mittel zur Ermittlung, ob die zweite benachbarte Verarbeitungseinheit (210) zum Empfangen der Nachricht von der ersten Verarbeitungseinheit (200) verfügbar ist, bevor die Nachricht (400) von der ersten Verarbeitungseinheit (200) an die zweite Verarbeitungseinheit (210) gesendet wird,
(j) ein Mittel zur Ermittlung, ob eine dritte benachbarte Verarbeitungseinheit (230), die mit der ersten Verarbeitungseinheit verbunden ist, verfügbar ist, um die Nachricht (400) von der ersten Verarbeitungseinheit (200) zu empfangen, falls die zweite Verarbeitungseinheit (210) nicht zur Verfügung steht, sodass die virtuelle Adresse der dritten Verarbeitungseinheit (230) um weniger von der virtuellen Adresse der Nachricht abweicht, als die virtuelle Adresse der ersten Verarbeitungseinheit von der virtuellen Adresse der Nachricht abweicht.

14. Computerprogramm-Produkt für ein Netzwerk-Datenübertragungssystem, das Computerprogramm-Mittel zum Senden von Nachrichten von einer Quellverarbeitungseinheit (200) an eine Zielverarbeitungseinheit (220) enthält, wobei die folgenden Schritte ausgeführt werden:
(a') Unterbrechen der Übermittlung oder Verarbeitung einer zweiten Nachricht mit einem zweiten Prioritätsbezeichner, falls der zweite Prioritätsbezeichner eine Priorität angibt, die geringer ist, als die von einem ersten Prioritätsbezeichner angegebene,
(a) Vergleichen einer virtuellen Zieladresse der Nachricht (400) mit einem ersten Prioritätsbezeichner, wobei die virtuelle Zieladresse die virtuelle Adresse der Zielverarbeitungseinheit (220) ist, mit der virtuellen Adresse einer ersten Verarbeitungseinheit (210),
(b) Verarbeiten der Nachricht durch die erste Verarbeitungseinheit (200), falls die virtuelle Zieladresse der Nachricht (400) mit der virtuellen Adresse der ersten Verarbeitungseinheit (200) übereinstimmt,
(c) Ermitteln eines ersten Differenzvektors, der die Entfernung zwischen der virtuellen Adresse der ersten Verarbeitungseinheit (200) und der virtuellen Zieladresse der Nachricht (400) umfasst, falls die virtuelle Zieladresse der Nachricht nicht mit der virtuellen Adresse der ersten Verarbeitungseinheit (200) übereinstimmt,
(d) Ermitteln einer zweiten Verarbeitungseinheit (210) unter den zur ersten verarbeitungseinheit (200) benachbarten Verarbeitungseinheiten, an die die Nachricht (400) übertragen wird, sodass ein zweiter Differenzvektor zwischen der virtuellen Adresse der zweiten Verarbeitungseinheit (210) und der virtuellen Zieladresse eine kleinere Norm hat, als der erste Differenzvektor,
(e) Wiederholen der Schritte (a) bis (d) mit der zweiten Verarbeitungseinheit (210) als erste Verarbeitungseinheit, bis die virtuelle Adresse der ersten Verarbeitungseinheit mit der virtuellen Zieladresse der Nachricht (400) übereinstimmt und die Nachricht wie in Schritt (b) angegeben bearbeitet wird.

15. Computerprogramm-Produkt nach Anspruch 14, das ferner Computerprogramm-Mittel zu den folgenden Zwecken umfasst:
(a) Berechnen einer Vielzahl von Differenzvektoren zwischen der virtuellen Zieladresse der Nachricht (400) und der Vielzahl von virtuellen Adressen aller benachbarter Verarbeitungseinheiten (210, 230), die mit der ersten Verarbeitungseinheit (200) verbunden sind,
(b) Vergleichen der Differenzvektoren und Ermitteln eines dritten Differenzvektors unter der Vielzahl von Differenzvektoren mit der kleinsten Norm,
(c) Ermitteln einer dritten Verarbeitungseinheit (230), die zu dem dritten Differenzvektor gehört,
(c) Ermitteln eines weiteren Differenzvektors mit der zweitkleinsten Norm unter der Vielzahl von Differenzvektoren und seine betreffende Verarbeitungseinheit, falls die dritte Verarbeitungseinheit (230) nicht zur Verfügung steht,
(d) Ermitteln eines weiteren Differenzvektors mit der zweitkleinsten Norm unter der Vielzahl von Differenzvektoren sowie dessen zugehörige Verarbeitungseinheit, falls die dritte Verarbeitungseinheit (230) nicht verfügbar ist,
(e) Wiederholen von Schritt (d) mit dem nächstkleinsten Differenzvektor, bis die zugehörige Verarbeitungseinheit verfügbar ist.

## Revendications

1. Procédé d'acheminement d'un message à l'intérieur d'un système intégré en réseau au moyen d'une première unité de traitement (200) du système intégré en réseau, l'unité de traitement comportant au moins un premier et un second ports (502) et comportant une première adresse virtuelle affectée, la première adresse virtuelle se rapportant à un système de coordonnées dans l'espace, le procédé comprenant les étapes consistant à :
(a) recevoir un message (400) avec un premier identificateur de priorité par l'intermédiaire du premier port (502), le message (400) comprenant une seconde adresse virtuelle cible se rapportant au système de coordonnées dans l'espace,
(b) comparer les première et seconde adresses virtuelles,
(c) traiter le message (400) au moyen de la première unité de traitement (200), si la première adresse correspond à la seconde adresse,
(d) déterminer une troisième adresse virtuelle correspondant à une seconde unité de traitement (210) du système intégré en réseau et étant connectée à la première unité de traitement (200) par l'intermédiaire des au moins premier ou second ports (502), grâce à quoi la troisième adresse virtuelle diffère moins de la seconde adresse virtuelle que la première adresse virtuelle ne diffère de la seconde adresse virtuelle, si la première adresse virtuelle ne correspond pas à la seconde adresse virtuelle,
(e) envoyer le message (400) par l'intermédiaire de l'un des au moins premier ou second ports (502) à la seconde unité de traitement (210), correspondant à la troisième adresse virtuelle, si la première adresse virtuelle ne correspond pas à la seconde adresse virtuelle, et interrompre la transmission ou le traitement d'un second message, si ladite seconde unité de traitement (210) est en train de transférer ou de traiter ledit second message avec un second identificateur de priorité, et si la priorité dudit second message est inférieure à la priorité du premier message,
(e') répéter les étapes (a) à (e) avec la seconde unité de traitement (210) après que le message a été envoyé à la seconde unité de traitement (210) en tant que première unité de traitement (200) jusqu'à ce que l'adresse virtuelle de la première unité de traitement corresponde à l'adresse virtuelle cible du message.

2. Procédé selon la revendication 1, le message (400) qui est transféré de la première unité de traitement (200) à la seconde unité de traitement (210) comprenant :
(f) un en-tête (402) comprenant une adresse virtuelle cible,
(g) un paquet de données (404) comprenant une séquence de données quelconque représentant un second message d'un type de message quelconque associé au système de réseau quelconque,
(h) un en-queue (406) comprenant un identificateur déterminant la fin du message (400).

3. Procédé selon la revendication 2, la première unité de traitement (200) étant disponible pour recevoir le premier message par l'intermédiaire du premier port (502) lorsque :
(i) aucun autre message (400) n'est actuellement transféré par l'intermédiaire de la première unité de traitement (200),
(j) la première unité de traitement (200) répond à une demande de disponibilité au cours d'un temps de latence prédéfini avant que le message (400) ne soit reçu par la première unité de traitement (200),
(k) la priorité du premier message (400) est supérieure à la priorité d'un second message qui est actuellement transféré ou traité par la première unité de traitement (200).

4. Procédé selon la revendication 3, l'envoi du message à partir de la première unité de traitement (200) comprenant en outre les étapes consistant à :
(l) déterminer si la seconde unité de traitement voisine (210) est disponible pour recevoir le message (400) provenant de la première unité de traitement (200) avant d'envoyer le message (400) de la première unité de traitement (200) à la seconde unité de traitement (210).
(m) envoyer le message (400) de la première unité de traitement (200) à la seconde unité de traitement (210), si la seconde unité de traitement (210) est disponible pour recevoir le message (400),
(n) déterminer si une troisième unité de traitement voisine (230) connectée à la première unité de traitement est disponible pour recevoir le message (400) provenant de la première unité de traitement (200), si la seconde unité de traitement (210) n'est pas disponible, de sorte que l'adresse virtuelle de la troisième unité de traitement (230) diffère moins de l'adresse virtuelle du message (400) que l'adresse virtuelle de la première unité de traitement (200) ne diffère de l'adresse virtuelle du message (400),
(o) envoyer le message (400) de la première unité de traitement (200) à la troisième unité de traitement (230), si la troisième unité de traitement (230) est disponible pour recevoir le message (400),
(p) retourner à l'étape (n) avec une autre unité de traitement voisine connectée à la première unité de traitement en tant que troisième unité de traitement, si la troisième unité de traitement (230) n'est pas disponible pour recevoir le message.

5. Procédé selon la revendication 3 ou 4, comprenant en outre la détermination d'une quatrième unité de traitement connectée à la première unité de traitement (200) de sorte que l'adresse virtuelle de la quatrième unité de traitement diffère plus de l'adresse virtuelle du message (400) que l'adresse virtuelle de la première unité de traitement (200) ne diffère de l'adresse virtuelle du message, si ni l'une ni l'autre de la seconde ou troisième unités de traitement voisines (210, 230) ne sont disponibles avec une adresse virtuelle correspondante différant moins de l'adresse virtuelle du message (400) que l'adresse virtuelle de la première unité de traitement (200) ne diffère de l'adresse virtuelle du message (400).

6. Procédé selon l'une quelconque des revendications précédentes 1 à 5, comprenant en outre le fait que lorsque le premier message (400) ayant le premier identificateur de priorité provenant de la première unité de traitement (200) doit être transféré à la seconde unité de traitement (200) qui est en train de transférer ou de traiter le second message avec le second identificateur de priorité, la transmission ou le traitement du second message est interrompu et le transfert du premier message (400) vers la seconde unité de traitement (210) est initié, si la priorité du second message est inférieure à la priorité du premier message (400).

7. Procédé selon l'une quelconque des revendications précédentes 1 à 6, établissant en outre un trajet de message (260, 262, 264) dans le réseau de communication avec l'unité de traitement source (230) en tant que point de départ et l'unité de traitement cible (220) en tant que point d'extrémité, le trajet de message (260, 262, 264) connectant une pluralité d'unités de traitement (230, 240, 250, 220), comprenant les étapes consistant à :
(q) transmettre l'en-tête du message (402) de la première unité de traitement (230) à la seconde unité de traitement (240) et à garder la connexion (260) entre les première et seconde unités de traitement jusqu'à ce que la première unité de traitement (230) reçoive un identificateur de libération provenant de la seconde unité de traitement (240),
(r) répéter l'étape (q) avec la seconde unité de traitement (240) en tant que première unité de traitement jusqu'à ce que l'adresse virtuelle de la première unité de traitement corresponde à l'adresse virtuelle cible du message (400), en établissant ainsi le trajet de message (260, 262, 264) constitué d'une pluralité d'unités de traitement (230, 240, 250, 220) connectant l'unité de traitement source (230) et l'unité de traitement cible (220),
(s) envoyer un identificateur de début de l'unité de traitement cible (220) à l'unité de traitement source (230) par l'intermédiaire du trajet de message établi (260, 262, 264) lorsque l'en-tête de message 402 a atteint l'unité de traitement cible (220),
(t) transférer le paquet de données (404) du message (400) à partir de l'unité de traitement source (230) par l'intermédiaire du trajet de message établi (260, 262, 264) lorsque l'identificateur de début a atteint l'unité de traitement source (230),
(u) transmettre un identificateur de libération de l'unité de traitement cible (220) à l'unité de traitement source (230) par l'intermédiaire du trajet de message (260, 262, 264) après que le message (400) a été transféré à l'unité de traitement cible (220), en libérant ainsi les unités de traitement individuelles provenant de la pluralité d'unités de traitement (230, 240, 250, 220) formant le trajet de message (260, 262, 264).

8. Procédé selon l'une quelconque des revendications précédentes 1 à 7, comprenant en outre les étapes consistant à :
(v) identifier la seconde unité de traitement (210) comme pouvant être mise en oeuvre de façon limitée lorsque la seconde unité de traitement (210) n'est pas disponible pour recevoir le message (400) à partir de la première unité de traitement (200) un nombre de fois prédéterminé,
(w) déterminer une troisième unité de traitement (220) au lieu de la seconde unité de traitement (210) pour recevoir le message (400) provenant de la première unité de traitement (200) lorsque la seconde unité de traitement (210) a été identifiée comme pouvant être mise en oeuvre de façon limitée.

9. Unité de traitement (200 ; 500) d'un système intégré en réseau destinée à acheminer un message (400), comprenant :
(a) au moins des premier et second ports (502) connectant l'unité de traitement (200 ; 500) à au moins une seconde (210) et une troisième (220) unités de traitement voisines,
(b) un moyen destiné à recevoir un premier message (400) avec un premier identificateur de priorité par l'intermédiaire des premier et second ports (502), le premier message comprenant une seconde adresse virtuelle cible se rapportant à un système de coordonnées dans l'espace,
(b') un moyen destiné à interrompre la transmission ou le traitement d'un second message ayant un second identificateur de priorité si la priorité dudit second message, telle qu'indiquée par ledit second identificateur de priorité, est inférieure à la priorité du premier message telle qu'indiquée par ledit premier identificateur de priorité,
(c) une première adresse virtuelle se rapportant au système de coordonnées dans l'espace,
(c') un moyen destiné à comparer ladite seconde adresse virtuelle cible à ladite première adresse virtuelle,
(d) une unité de traitement centrale (506 ; 600) destinée à traiter le premier message (400) si ladite seconde adresse virtuelle cible correspond à la première adresse virtuelle,
(e) l'unité de traitement centrale (506 ; 600) comprenant en outre un module de commutation (604) connectant les au moins premier et second ports (502) à un contrôleur (602), le contrôleur (602) traitant le message reçu (400), négociant avec les au moins seconde ou troisième unités de traitement voisines (210, 220) et contrôlant la disponibilité, en déterminant une seule des au moins seconde et troisième unités de traitement voisines (208, 220) si ladite seconde adresse virtuelle cible ne correspond pas à la première adresse virtuelle, de sorte que l'adresse virtuelle correspondante de l'unité de traitement déterminée diffère moins de la seconde adresse virtuelle du message que la première adresse virtuelle ne diffère de la seconde adresse virtuelle du message (400) et envoyant le message (400) à l'unité de traitement déterminée par l'intermédiaire du module de commutation (604).

10. Unité de traitement selon la revendication 10, l'unité de traitement centrale (506 ; 600) comprenant en outre :
(g) un convertisseur de message (608), connectant le module de commutation (604) et le contrôleur (602) pour décoder et/ou coder l'adresse virtuelle cible d'un message (400).
(h) un module de mémoire de commande (612) connecté au contrôleur (602), mémorisant un algorithme pour une procédure par arbitrage devant être exécutée par le contrôleur (602),
(i) une table de consultation (612) connectée au contrôleur (602), mémorisant une table de traduction d'adresse pour la conversion d'adresses d'héritage de sous-réseaux connectés à l'unité de traitement (500) et pour la conversion d'adresses virtuelles et d'adresses physiques d'au moins les première, seconde et troisième unités de traitement (200, 210, 200),
(j) un registre (616) pour une mémorisation non volatile de l'adresse virtuelle de l'unité de traitement (500),
(k) un module de registre de paramètres (614) connecté au contrôleur (602), mémorisant des paramètres d'état de message.

11. Système de communication de réseau destiné à transmettre un message (400) d'une unité de traitement source (200) à une unité de traitement cible (210), le message comprenant l'adresse virtuelle d'une unité de traitement source (200) et l'adresse d'une unité de traitement cible (210), le système de communication de réseau comprenant :
(a) une première pluralité d'unités de traitement établissant le réseau (200, 210, 220, 230, ...), dans laquelle chaque unité de traitement (200) est connectée à une seconde pluralité d'unités de traitement voisines (210, 230), de sorte que la seconde pluralité d'unités de traitement voisines est un sous-ensemble de la première pluralité d'unités de traitement, chaque unité de traitement étant affectée à une adresse virtuelle unique se rapportant à un système de coordonnées dans l'espace,
(b) un moyen destiné à comparer l'adresse virtuelle cible d'un message (400) comprenant un identificateur de priorité déterminant la priorité de message avec une première adresse virtuelle d'une première unité (200) parmi la première pluralité d'unités de traitement (200, 210, 220, 230, ...),
(c) un moyen destiné à déterminer une seconde unité de traitement (210) à partir de la seconde pluralité d'unités de traitement (210, 230), de sorte que l'adresse virtuelle correspondante de la seconde unité de traitement (210) diffère moins de la seconde adresse virtuelle du message (400) que la première adresse virtuelle ne diffère de la seconde adresse virtuelle du message,
(d) un moyen destiné à contrôler la disponibilité de la seconde unité de traitement (210),
(e) un moyen destiné à transférer le message de la première (200) à la seconde unité de traitement (210),
(e') un moyen destiné à interrompre la transmission ou le traitement d'un second message traité par la seconde unité de traitement si le second message comprend un second identificateur de priorité indiquant une priorité qui est inférieure à la priorité du premier message.

12. Système de communication de réseau selon la revendication 11, le message (400) comprenant en outre :
(f) un en-tête (402) comprenant l'adresse virtuelle cible et l'adresse virtuelle source du message, un identificateur déterminant le type de transfert de message et un identificateur déterminant un temps de latence admissible maximum,
(g) un paquet de données (404) comprenant une séquence de données quelconque représentant un autre message ayant un type de message quelconque se rapportant à un système de réseau quelconque,
(h) un en-queue (406) comprenant un identificateur déterminant la fin du message.

13. Système de communication de réseau selon la revendication 11 ou 12, comprenant en outre :
(i) un moyen destiné à déterminer si la seconde unité de traitement voisine (210) est disponible pour recevoir le message provenant de la première unité de traitement (200) avant d'envoyer le message (400) de la première unité de traitement (200) à la seconde unité de traitement (210),
(j) un moyen destiné à déterminer si une troisième unité de traitement voisine (230) connectée à la première unité de traitement est disponible pour recevoir le message (400) de la première unité de traitement (200), si la seconde unité de traitement (210) n'est pas disponible, de sorte que l'adresse virtuelle de la troisième unité de traitement (230) diffère moins de l'adresse virtuelle du message que l'adresse virtuelle de la première unité de traitement ne diffère de l'adresse virtuelle du message.

14. Produit de programme informatique pour un système de communication de réseau comprenant un moyen de programme informatique destiné à transmettre des messages d'une unité de traitement source (200) à une unité de traitement cible (220) au moyen des étapes consistant à :
(a') interrompre la transmission ou le traitement d'un second message avec un second identificateur de priorité si ledit second identificateur de priorité indique une priorité qui est inférieure à la priorité indiquée par un premier identificateur de priorité,
(a) comparer une adresse virtuelle cible du message (400) avec un premier identificateur de priorité, ladite adresse virtuelle cible représentant une adresse virtuelle de l'unité de traitement cible (220), à l'adresse virtuelle d'une première unité de traitement (210),
(b) traiter les messages par le biais de la première unité de traitement (200) si l'adresse virtuelle cible du message (400) correspond à l'adresse virtuelle de la première unité de traitement (200),
(c) déterminer un premier vecteur de différence comprenant la distance entre l'adresse virtuelle de la première unité de traitement (200) et l'adresse virtuelle cible du message (400), si l'adresse virtuelle cible du message ne correspond pas à l'adresse virtuelle de la première unité de traitement (200),
(d) déterminer une seconde unité de traitement (210) parmi les unités de traitement voisines de la première unité de traitement (200), à laquelle le message (400) est transféré, de sorte qu'un second vecteur de différence entre l'adresse virtuelle de la seconde unité de traitement (210) et l'adresse virtuelle cible présente une norme plus petite que le premier vecteur de différence,
(e) répéter les étapes (a) à (d) avec la seconde unité de traitement (210) en tant que première unité de traitement jusqu'à ce que l'adresse virtuelle de la première unité de traitement corresponde à l'adresse virtuelle cible du message (400) et le message étant traité comme cela est indiqué par l'étape (b).

15. Produit de programme informatique selon la revendication 14, comprenant en outre un moyen de programme informatique destiné à :
(a) calculer une pluralité de vecteurs de différence entre l'adresse virtuelle cible du message (400) et la pluralité d'adresses virtuelles de toutes les unités de traitement voisines (210, 230) connectées à la première unité de traitement (200),
(b) comparer les vecteurs de différence et déterminer un troisième vecteur de différence parmi la pluralité de vecteurs de différence présentant la norme la plus petite,
(c) déterminer une troisième unité de traitement (230) appartenant au troisième vecteur de différence,
(d) déterminer un autre vecteur de différence présentant la seconde norme la plus petite parmi la pluralité de vecteurs de différence et son unité de traitement appropriée, si la troisième unité de traitement (230) n'est pas disponible,
(e) répéter l'étape (d) avec le prochain plus petit vecteur de différence jusqu'à ce que l'unité de traitement appropriée soit disponible.
